# EUROPÄISCHE PATENTANMELDUNG

(11) **EP 1 870 644 A2**
(43) Veröffentlichungstag der Anmeldung: **26.12.2007**
(21) Anmeldenummer: 07110494.7
(22) Anmeldetag: 18.06.2007
(51) Int. Cl.: F24F 12/00

(54) **Schrankkombinationsabschnitt mit einer Lüftungsvorrichtung**

(30) Priorität: 23.06.2006 CH 10112006
(71) Anmelder: Imes Management AG, 6330 Cham (CH)
(72) Erfinder: Weidmann, Urs, 6300, Zug (CH)
(74) Vertreter: Falk, Urs

(57) **Zusammenfassung**

Ein Schrankkombinationsabschnitt (1) enthält eine Lüftungsvorrichtung. Die Lüftungsvorrichtung weist einen ersten Lüftungskanal (10) auf, um Aussenluft aufzubereiten und als Zuluft einem Raum zuzuführen, und einen zweiten Lüftungskanal (11), um Abluft aus dem Raum abzuführen und als Fortluft der Umgebung zuzuführen. Die Lüftungsvorrichtung enthält verschiedene Komponenten (12) einschliesslich eines Gebläses (14). Die Komponenten (12) sind im ersten und/oder im zweiten Lüftungskanal (10, 11) angeordnet. Der Schrankkombinationsabschnitt (1) weist einen unteren Abschnitt (3), einen mittleren Abschnitt (4) und einen oberen Abschnitt (5) auf, die übereinander angeordnet sind. Die Komponenten (12) der Lüftungsvorrichtung sind im unteren Abschnitt (3) und/oder im oberen Abschnitt (5) des Schrankkombinationsabschnittes (1) angeordnet.

## Beschreibung

Die vorliegende Erfindung betrifft einen Schrankkombinationsabschnitt mit einer Lüftungsvorrichtung gemäss dem Oberbegriff des Anspruchs 1.

Die Lüftungsvorrichtung wird von einem ersten Luftstrom, der als Zuluft einem Raum zugeführt wird, und von einem zweiten Luftstrom, der Abluft aus dem Raum abführt und als Fortluft der Umgebung zuführt, durchströmt. Die Lüftungsvorrichtung enthält verschiedene Komponenten einschliesslich eines Gebläses, die dazu dienen, Wärme und/oder Feuchtigkeit zwischen dem ersten Luftstrom und dem zweiten Luftstrom auszutauschen, wobei die Komponenten durch entsprechende Leitungen miteinander verbunden sind. Solche Lüftungsvorrichtungen sind aus dem Stand der Technik bekannt.

Aus der WO 2004085946 ist beispielsweise ein Plattenwärmetauscher mit einem integrierten Elektrofilter und einer Reinigungsvorrichtung für die Reinigung des Elektrofilters bekannt. Der Plattenwärmetauscher dient zum Austausch von Wärme zwischen zwei Luftströmen.

Aus der EP 1521040 ist ein Feuchtetauscher zum Austausch von Feuchtigkeit zwischen zwei Luftströmen bekannt. Ein solcher Feuchtetauscher umfasst im wesentlichen zwei Hohlräume, welche durch eine wasserdampfpermeable Struktur getrennt sind. Die wasserdampfpermeable Struktur trennt die beiden Luftströme, ermöglicht aber den Austausch von Feuchtigkeit zwischen den beiden Luftströmen.

Aus der GB 1335886 ist ein Klimagerät bekannt, das einen Wärmetauscher, einen Luftfilter, ein Kühlaggregat, ein Gebläse, einen Befeuchter und ein Mess- und Steuergerät aufweist. Das Klimagerät ist in einem Schrank platziert, der die konventionelle Erscheinung der anderen Schränke hat, die beispielsweise in einer Einbauküche verwendet werden. Da das von diesem Klimagerät eingenommene Volumen recht gross ist, hat sich dessen Einbau in einer Küche auf dem Markt nicht durchgesetzt. Die Lüftungsvorrichtungen werden deshalb typischerweise im Keller eines Hauses eingebaut. In einem Einfamilienhaus geht dies ohne grössere Schwierigkeiten. Bei Mehrfamilienhäusern, insbesondere bei Wohnungsbauten mit mehreren übereinander liegenden Wohnungen, ist ein Einbau im Keller nachteilig. Um die einzelnen Wohnungen zu belüften, müssen Rohrleitungssysteme eingebaut werden. Die Rohrleitungssysteme, welche Rohrlängen von mehreren 10 Metern bis über 100 Meter haben können, reduzieren den Wirkungsgrad der Lüftungsvorrichtung. Zudem besteht die Gefahr, dass sich Fremdpartikel, wie Feststoffe oder gar Bakterien oder Pilze, im Rohrleitungssystem ansammeln. Insbesondere die warme und feuchte Abluft, aber auch die feuchte Zuluft, bilden ideale Voraussetzungen für die Ausbreitung von Bakterien oder Pilzen im Rohrleitungssystem.

Der Erfindung liegt die Aufgabe zugrunde, eine Lüftungsvorrichtung bzw. -anordnung derart zu verbessern, dass diese in einfacher und effizienter Art und Weise in einer Küche und/oder in einem Wohnraum eingebaut werden kann.

Unter Wohnraum wird hier jeder sich in einer Wohnung oder einem Einfamilienhaus befindliche Raum verstanden, beispielsweise eine Küche, ein Schlafzimmer, ein Wohnzimmer, ein Büro oder ein Flur.

Die gestellte Aufgabe wird erfindungsgemäss gelöst durch einen Schrankkombinationsabschnitt mit einer eingebauten Lüftungsvorrichtung, wobei der Schrankkombinationsabschnitt im Design der einzelnen Elemente oder Module einer Schrankkombination eines Wohnraums bzw. im Design der einzelnen Elemente einer Küchenkombination, falls er in einer Küche eingebaut ist, ausgeführt ist, wobei der Schrankkombinationsabschnitt im wesentlichen einen unteren Abschnitt, einen mittleren Abschnitt und einen oberen Abschnitt aufweist, die übereinander angeordnet sind. Wenn der Boden des mittleren Abschnitts eine frei zugängliche Arbeitsfläche ist, dann sind die Komponenten der Lüftungsvorrichtung nur im unteren und/oder oberen Abschnitt angeordnet. Wenn der mittlere Abschnitt hingegen ein Küchengerät aufnimmt, das die Tiefe der Schrankkombination nicht ausfüllt, beispielsweise einen Mikrowellenofen oder eine Kaffeemaschine, dann sind die Komponenten der Lüftungsvorrichtung im unteren und/oder oberen Abschnitt und/oder in dem zwischen dem Küchengerät und der Rückwand der Schrankkombination verbleibenden Raum angeordnet. Bei dieser Variante können die Komponenten der Lüftungsvorrichtung und das Küchengerät die gleichen Versorgungsleitungen benützen.

Eine derartige Schrankkombination kann sowohl in Einfamilienhäusern als auch in einzelnen Wohnungen eines Mehrfamilienhauses angeordnet werden. Der dezentrale Einbau der Lüftungsvorrichtungen ermöglicht eine individuelle Abrechnung der Lüftungskosten.

Weitere vorteilhafte Ausführungsformen sind in den Unteransprüchen gekennzeichnet.

Die Erfindung wird im folgenden anhand von Ausführungsbeispielen und anhand der Zeichnung näher beschrieben. Die Figuren sind nicht massstäblich gezeichnet.
- Fig. 1: zeigt eine schematische perspektivische Ansicht eines erfindungsgemässen Schrankkombinationsabschnittes mit einer eingebauten Lüftungsvorrichtung, und
- Fig. 2: zeigt eine schematische vertikale Schnittansicht eines Schrankkombinationsabschnittes.
- Fig. 3: zeigt eine schematische vertikale Schnittansicht eines weiteren Schrankkombinationsabschnittes.

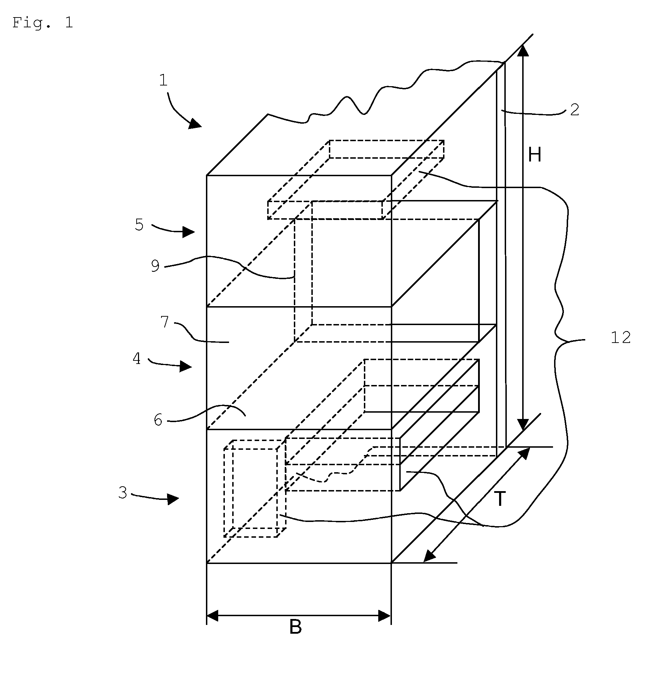

Die Fig. 1 zeigt eine schematische Ansicht eines Schrankkombinationsabschnittes 1. In der Regel werden mehrere solche oder ähnliche Schrankkombinationsabschnitte zu einer Schrankkombination zusammengefügt, dies in angebauter oder freistehender Weise. Falls die Schrankkombination in einer Küche eingebaut wird, dann spricht man von einer Küchenkombination. Die Erfindung wird bei diesem Beispiel anhand einer Küchenkombination erläutert. Der in der Fig. 1 dargestellte Schrankkombinationsabschnitt 1 ist also ein Küchenkombinationsabschnitt. Unter einer Küchenkombination wird die Ausstattung einer Haushaltsküche oder einer industriellen Grossküche z.B. eines Restaurants oder einer Kantine verstanden. Eine Küchenkombination umfasst typischerweise mehrere verschiedene oder gleichartige Küchenelemente, die in modularer Weise miteinander kombiniert werden. Solche Küchenelemente sind beispielsweise Schränke, Schubladen, Drehschränke, elektrische Küchengeräte, Nischen, Arbeitsflächen, Spültröge etc. Beispiele für elektrische Küchengeräte sind Steamer, Backofen, Mikrowellenofen, Geschirrspüler, Kühlschrank, Kaffeemaschine, Kochherd und Dampfabzug, etc.

Typischerweise wird eine solche Küchenkombination entlang den Wänden einer Küche eingebaut. Eine solche Wand ist mit der Bezugsziffer 2 versehen. Es ist aber auch möglich, dass eine Küchenkombination oder Teile einer Küchenkombination in der Mitte eines Raumes angeordnet sind. Bei einer solchen Anordnung spricht der Fachmann von einer freistehenden Kochinsel. Die Küchenkombinationsabschnitte weisen typischerweise eine normierte Breite B und eine normierte Tiefe T auf. Die Normierung der Abmessungen ist vorteilhaft, denn sie erlaubt ein einfaches Auswechseln einzelner Küchenelemente, falls diese ihre Lebensdauer erreicht haben oder falls ein neues Gerät eingebaut werden soll. Die normierten Abmessungen können von Land zu Land unterschiedlich sein. In der Schweiz beträgt die normierte Breite B des Küchenkombinationsabschnittes typischerweise 50 cm, 55 cm oder 60 cm.

Der in der Fig. 1 gezeigte Küchenkombinationsabschnitt umfasst in vertikaler Richtung im wesentlichen drei Abschnitte, nämlich einen unteren Abschnitt 3, einen mittleren Abschnitt 4 und einen oberen Abschnitt 5, und enthält eine Lüftungsvorrichtung. Der untere Abschnitt 3 steht auf einem Küchenboden oder einer Konsole auf. Alle drei Abschnitte zusammen weisen eine Höhe H auf, wobei die Höhe H der Raumhöhe der Küche entspricht oder kleiner als die Raumhöhe der Küche ist. Die Distanz zwischen dem Küchenboden und dem Boden 6 des mittleren Abschnittes 4 beträgt vorzugsweise zwischen 0.8 und 1.2 m, was einer idealen Arbeitshöhe entspricht. Der Boden 6 des mittleren Abschnittes 4 kann eine frei zugängliche Arbeitsfläche sein, die sich auch über mehrere benachbarte Küchenkombinationsabschnitte erstrecken kann. Alternativ kann im mittleren Abschnitt 4 ein elektrisches Küchengerät 7 angeordnet sein, insbesondere ein Mikrowellenofen, eine Kaffeemaschine, ein Steamer, ein Kochherd und/oder ein Dampfabzug. Dieses im mittleren Abschnitt angeordnete Küchengerät 7 lässt sich durch den Benutzer besonders komfortabel bedienen. Die Nische, in welcher das Küchengerät 7 angeordnet wird, kann auch als Aussparung 8 bezeichnet werden. Zwischen der Wand 2 und der Rückwand 9 des Küchengeräts 7 besteht ein Zwischenraum, durch welchen Versorgungsleitungen zum Küchengerät 7 geführt werden.

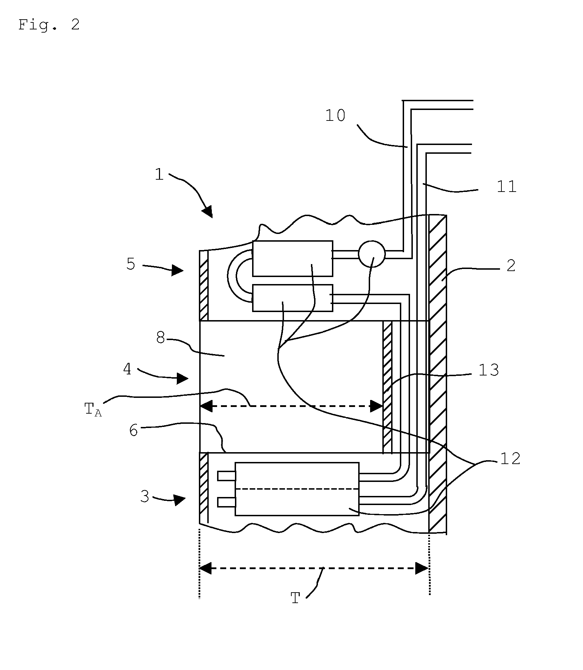

Die Lüftungsvorrichtung umfasst einen ersten Lüftungskanal 10 (Fig. 2) für die Zufuhr von Aussenluft, die als Zuluft in die Küche strömt, und einen zweiten Lüftungskanal 11 für die Abfuhr von Abluft aus der Küche, die als Fortluft an die Umgebung abgegeben wird, sowie verschiedene Komponenten 12 wie Gebläse, Filter, Wärmetauscher, Feuchtetauscher, Befeuchter, Entfeuchter, Kühlaggregate, etc. Diese Komponenten 12 dienen für die Aufbereitung der Aussenluft, damit diese als Zuluft mit einer gewünschten Temperatur und einer gewünschten Feuchtigkeit der Küche zugeführt werden kann. Die Aufbereitung der Aussenluft erfolgt mit Vorteil auf energiesparende Weise, indem Wärme und/oder Feuchtigkeit zwischen den im ersten und im zweiten Lüftungskanal strömenden Luftströmen ausgetauscht wird. Geeignete Wärmetauscher und Feuchtetauscher sind beispielsweise bekannt aus der WO 2004085946, der EP 1521040 und der WO 2007012213. Die Komponenten 12 der Lüftungsvorrichtung können aber auch eine konventionelle Klimaanlage bilden.

Wenn der mittlere Abschnitt 4 des Küchenkombinationsabschnittes als frei zugängliche Arbeitsfläche oder als Kochherd mit oder ohne Dampfabzug ausgebildet ist, dann sind die Komponenten 12 der Lüftungsvorrichtung im unteren Abschnitt 3 und/oder oberen Abschnitt 5 des Küchenkombinationsabschnittes angeordnet.

Wenn im mittleren Abschnitt 4 des Küchenkombinationsabschnittes ein elektrisches Küchengerät 7 angeordnet ist und zwischen der Rückwand 9 des Küchengeräts 7 und der Wand 2 ein Zwischenraum verbleibt, dann sind die Komponenten 12 der Lüftungsvorrichtung im unteren Abschnitt 3 und/oder oberen Abschnitt 5 und/oder in diesem Zwischenraum angeordnet. Besonders vorteilhaft ist der Einbau eines Steamers, eines Mikrowellenofens oder einer Kaffeemaschine im Küchenkombinationsabschnitt, der die Lüftungsvorrichtung enthält, weil einerseits die Tiefe dieser Geräte kleiner ist als die Tiefe T des Küchenkombinationsabschnittes, so dass im Zwischenraum einzelne Komponenten 12 der Lüftungsvorrichtung Platz finden, und weil andererseits diese Geräte und die Komponenten 12 der Lüftungsvorrichtung über die gleichen Versorgungsleitungen mit elektrischer Energie und/oder Wasser versorgt werden können. Da auf ein schon bestehendes Leitungssystem zurückgegriffen werden kann, ist es demnach bei neuen und auch bei schon bestehenden Küchen möglich, die Komponenten 12 der Lüftungsvorrichtung ohne grossen Aufwand einzubauen. Ein aufwendiges Bearbeiten von Mauerwerk bleibt dem Benutzer erspart.

Die Fig. 1 zeigt nur einzelne Komponenten der Lüftungsvorrichtung, nicht aber die Lüftungskanäle 10 und 11, die die Komponenten 12 verbinden. Die Fig. 2 zeigt in einem seitlichen Schnitt der Fig. 1 ein Beispiel der Lüftungsvorrichtung. Falls wie beim Beispiel der Fig. 1 das Küchengerät 7 vorhanden ist, dann sind die beiden Lüftungskanäle 10 und 11 zwischen der Wand 2 und der Rückwand 9 des Küchengeräts 7 angeordnet. Falls wie beim Beispiel der Fig. 2 der Boden 6 des mittleren Abschnitts 4 als frei zugängliche Arbeitsfläche oder Ablagefläche ausgebildet ist oder ein Spülbecken ist, dann sind die beiden Lüftungskanäle 10 und 11 zwischen der Wand 2 und einer Abdeckung 13 angeordnet. Die Tiefe T_{A} der Aussparung 8 kann geringer sein als die Tiefe T des Schrankkombinationsabschnittes, beispielsweise weil die Aussparung 8 zum Aufstellen eines Küchengeräts vorgesehen ist, dessen Gerätetiefe geringer ist als die Tiefe T des Schrankkombinationsabschnittes. Dies ist beispielsweise bei einer freistehenden Kaffeemaschine der Fall. In diesem Fall kann wenigstens eine Komponente der Lüftungsvorrichtung hinter der die Aussparung 8 begrenzenden Abdeckung 13 angeordnet sein.

Der erste Lüftungskanal 10 mündet bei diesem Beispiel in die Küche, er kann aber auch einen Teil der Zuluft über entsprechende Lüftungskanäle in andere Räume abgeben.

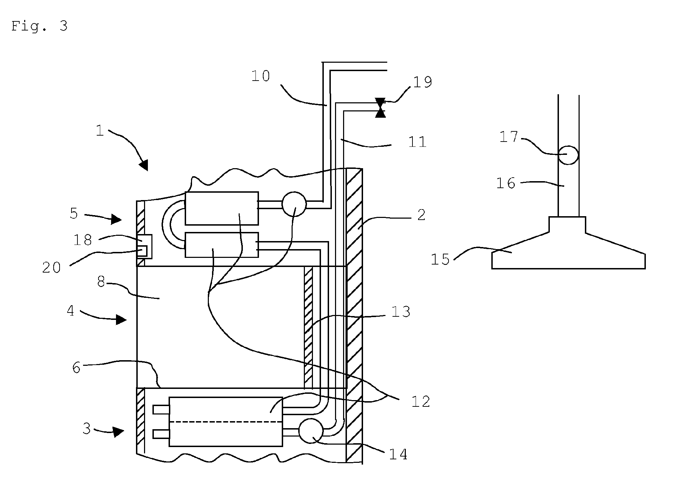

Die Lüftungsvorrichtung enthält als eine der Komponenten 12 wenigstens ein Gebläse, um den Luftstrom im ersten Luftkanal 10 oder den Luftstrom im zweiten Luftkanal 11 in Zirkulation zu versetzen. Das Gebläse ist beispielsweise ein Ventilator oder sonst eine Pumpe. Es ist vorteilhaft, den Betrieb des Gebläses mit dem Betrieb eines weiteren Lüftungsmittels, beispielsweise eines Dampfabzuges, wie dieser bei einem Kochherd verwendet wird, oder der Lüftung eines Badezimmers zu steuern. Die Fig. 3 illustriert ein solches Beispiel in schematischer Art. Auf der linken Seite der Fig. 3 ist ein Schrankkombinationsabschnitt ähnlich dem Beispiel der Fig. 2 dargestellt. Die Lüftungsvorrichtung enthält ein Gebläse 14, das im zweiten Lüftungskanal 11 für die Abführung der Abluft angeordnet ist. Auf der rechten Seite der Fig. 3 ist ein Dampfabzug dargestellt, der in üblicher Weise eine Dampfabzugshaube 15, einen Abluftkanal 16 und ein im Abluftkanal 16 angeordnetes Gebläse 17 umfasst. Das Gebläse 17 ist beispielsweise ein Ventilator. Der Dampfabzug kann in dem in der Fig. 3 dargestellten Schrankkombinationsabschnitt 1 oder an einem anderen Ort in der Küche platziert sein. Ein Steuermittel 18 steuert das Gebläse 14 gemäss der folgenden Funktion: Bei hoher Abzugsleistung des Dampfabzugs (bzw. der Lüftung des Badezimmers) fördert das Gebläse 14 einen kleineren Luftvolumenstrom aus dem Raum als bei kleiner Abzugsleistung. Damit wird die Bildung eines Unterdruckes in der Küche (bzw. im Badezimmer) bzw. in der gesamten Wohnung verhindert. Die Abzugswirkung des Dampfabzugs wird dabei nicht beeinträchtigt. Es kommt deshalb zu keinem oder nur zu einem verminderten Druckabfall in der Wohnung. Das Steuermittel 18 erhält die notwendigen Informationen über die Abzugsleistung des Dampfabzugs entweder von einer Steuerung des Dampfabzugs oder über die Erfassung der Drehzahl des Gebläses 17 oder des vom Gebläse 17 geförderten Luftvolumenstroms. Dazu ist beispielsweise ein Sensor vorgesehen. Das Steuermittel 18 ist beispielsweise wie dargestellt in die Front des oberen Abschnitts 5 des Schrankkombinationsabschnittes 1 integriert, wo es einem Benutzer bedienungsfreundlich zugänglich ist. Das Steuermittel 18 kann jedoch auch an einem beliebigen anderen Ort platziert sein. Der zweite Lüftungskanal 11 und der Abluftkanal 16 können einzeln ins Freie geführt werden, oder sie können bereits vor dem Austritt ins Freie in einen gemeinsamen Lüftungskanal münden.

Alternativ kann der Luftstrom im zweiten Luftkanal 11 beispielsweise mittels eines im zweiten Luftkanal 11 angeordneten Mittels 19 zur Reduzierung des Luftstroms, beispielsweise einer Drosselklappe oder eines pneumatischen Ventils reduziert werden, so dass das genannte Mittel 19 beim Auftreten eines Luftstroms im Abluftkanal 16 des Dampfabzugs den Fortluftstrom im zweiten Luftkanal 11 drosseln kann. Ein solches Mittel 19 ist in der Fig. 3 ebenfalls dargestellt.

Eine Kombination der Reduktion des Fortluftstromes durch die entsprechende Steuerung der Drehzahl des Gebläses 14 und mittels des Mittels 19 zur Reduzierung des Luftstroms ist ebenfalls möglich.

Eine weitere Möglichkeit besteht darin, einen Sensor 20 vorzusehen, der den im Raum herrschenden Luftdruck misst, und je nach Ausführung bei Unterdruck den Fortluftstrom im zweiten Lüftungskanal 11 durch eine Verringerung der Drehzahl des Gebläses 14 und/oder eine entsprechende Einstellung des Mittels 19 zur Reduzierung des Luftstroms zu reduzieren, so dass der Luftdruck im Raum gleich bleibt wie im Freien. Der Sensor 20 ist beispielsweise in das Steuermittel 18 integriert. Das Steuermittel 18 steuert die Drehzahl des Gebläses 14 und/oder das genannte Mittel 19 in Abhängigkeit vom Ausgangssignal des Sensors.

Vorteilhaft wirkt sich eine Verminderung des Unterdruckes auch aus, wenn in der Wohnung ein holzbefeuerter Ofen oder ein offenes Kaminfeuer vorhanden ist. Das Ausgleichen respektive Stabilisieren der Druckverhältnisse hat hier den Vorteil, dass der Dampfabzug bzw. die Lüftung den Abzug des Rauchs durch den Kamin nicht mehr beeinträchtigt.

Falls die Küche aus mehreren nebeneinander stehenden Küchenkombinationsabschnitten 1 besteht, wie ein solcher in Fig. 1 einzeln gezeigt ist, kann das Küchengerät 7 auch in einem benachbarten Küchenkombinationsabschnitt stehen. Da die entsprechenden Zuleitungen im benachbarten Küchenkombinationsabschnitt schon vorhanden sind, sind auch in diesem Fall die oben genanten Vorteile noch vorhanden. Die Leitungen müssen hier durch die Trennwand, welche sich zwischen den beiden Küchenkombinationsabschnitten befindet, geführt werden.

Bekanntlich ist die Aussentemperatur an den nach Norden orientierten Aussenwänden des Hauses kühler als an den übrigen Wänden. Um die Lüftungsvorrichtung möglichst optimal zu betreiben, ist es vorteilhaft, die Luftkanäle 10 und 11 an einer nach Norden orientieren Wand in die Umgebung treten zu lassen. Da die Küche häufig gegen Norden orientiert ist, ist es deshalb vorteilhaft, die Lüftungsvorrichtung in der Küche anzuordnen.

In der vorliegenden Ausführungsform wird ersichtlich, dass das Küchengerät 7 eine Tiefe aufweist, welche kleiner als die Normtiefe T ist. Anstelle eines solchen Küchengerätes 3 kann aber auch ein anderes der oben genannten Küchenelemente eingesetzt werden.

## Patentansprüche

1. Schrankkombinationsabschnitt (1) mit einer Lüftungsvorrichtung, wobei die Lüftungsvorrichtung einen ersten Lüftungskanal (10) aufweist, um Aussenluft aufzubereiten und als Zuluft einem Raum zuzuführen, wobei die Lüftungsvorrichtung einen zweiten Lüftungskanal (11) aufweist, um Abluft aus dem Raum abzuführen und als Fortluft der Umgebung zuzuführen, und wobei die Lüftungsvorrichtung verschiedene Komponenten (12) enthält, wobei die Komponenten (12) im ersten und/oder im zweiten Lüftungskanal (10, 11) angeordnet sind, **dadurch gekennzeichnet, dass** der Schrankkombinationsabschnitt (1) einen unteren Abschnitt (3), einen mittleren Abschnitt (4) und einen oberen Abschnitt (5) aufweist, die übereinander angeordnet sind, und dass die Komponenten (12) der Lüftungsvorrichtung im unteren Abschnitt (3) und/oder im oberen Abschnitt (5) angeordnet sind.

2. Schrankkombinationsabschnitt nach Anspruch 1, **dadurch gekennzeichnet, dass** ein elektrisches Küchengerät (7) im mittleren Abschnitt (4) angeordnet ist, dessen Tiefe geringer ist als eine Tiefe des Schrankkombinationsabschnittes (1) und dass mindestens eine Komponente (12) der Lüftungsvorrichtung hinter dem Küchengerät (7) angeordnet ist.

3. Schrankkombinationsabschnitt nach Anspruch 1, **dadurch gekennzeichnet, dass** der mittlere Abschnitt (4) als Aussparung (8) mit einem frei zugänglichen Boden (6) ausgebildet ist.

4. Schrankkombinationsabschnitt nach Anspruch 3, **dadurch gekennzeichnet, dass** die Tiefe der Aussparung (8) geringer ist als die Tiefe des Schrankkombinationsabschnittes und dass wenigstens eine Komponente der Lüftungsvorrichtung hinter einer die Aussparung (8) begrenzenden Abdeckung (13) angeordnet ist.

5. Schrankkombination mit einem Schrankkombinationsabschnitt nach einem der Ansprüche 1 bis 4, **gekennzeichnet durch** ein im zweiten Lüftungskanal (11) angeordnetes Gebläse (14) und ein Steuermittel (18), das die Drehzahl des Gebläses (14) in Abhängigkeit von der Leistung eines weiteren Lüftungsmittel steuert.

6. Schrankkombination mit einem Schrankkombinationsabschnitt nach einem der Ansprüche 1 bis 4, **gekennzeichnet durch** ein im zweiten Lüftungskanal (11) angeordnetes Mittel (19) zur Reduzierung des Luftstroms und ein Steuermittel (18), das das genannte Mittel (19) in Abhängigkeit von der Leistung eines weiteren Lüftungsmittel steuert.

7. Schrankkombination mit einem Schrankkombinationsabschnitt nach einem der Ansprüche 1 bis 4, **gekennzeichnet durch** ein im zweiten Lüftungskanal (11) angeordnetes Gebläse (14) und/oder ein im zweiten Lüftungskanal (11) angeordnetes Mittel (19) zur Reduzierung des Luftstroms, einen Sensor (20) für die Messung des im Raum herrschenden Luftdrucks und ein Steuermittel (18), das das Gebläse (14) und/oder das genannte Mittel (19) in Abhängigkeit von einem Ausgangssignal des Sensors (20) steuert.
